## Europäisches Patentamt

(19) **European Patent Office**

**Office européen des brevets**

(11) Veröffentlichungsnummer: **0 109 634**
**B1**

(12) # EUROPÄISCHE PATENTSCHRIFT

(45) Veröffentlichungstag der Patentschrift:
**07.01.87**

(51) Int. Cl.⁴: **G 03 B 27/04,** G 03 B 27/20

(21) Anmeldenummer: **83111337.8**

(22) Anmeldetag: **12.11.83**

(54) **Belichtungsvorrichtung.**

(30) Priorität: **22.11.82 DE 3243144**

(43) Veröffentlichungstag der Anmeldung:
**30.05.84 Patentblatt 84/22**

(45) Bekanntmachung des Hinweises auf die Patenterteilung:
**07.01.87 Patentblatt 87/2**

(84) Benannte Vertragsstaaten:
**BE DE FR GB IT NL**

(56) Entgegenhaltungen:
**DE - B - 2 247 504**
**DE - U - 1 940 812**
**FR - A - 2 184 314**
**US - A - 3 385 193**
**US - A - 3 547 730**
**US - A - 4 032 233**

(73) Patentinhaber: **HOECHST AKTIENGESELLSCHAFT,**
**Postfach 80 03 20, D-6230 Frankfurt am Main 80 (DE)**

(72) Erfinder: **Schön, Klaus-Peter, Rathenauplatz 14,**
**D-6200 Wiesbaden (DE)**
Erfinder: **Schmitt, Klaus, Buschungstrasse 54,**
**D-6200 Wiesbaden (DE)**

ACTORUM AG

## Beschreibung

Die Erfindung betrifft eine Belichtungsvorrichtung für lichtempfindlich beschichtete Platten mit voneinander trennbaren und zusammenführbaren, senkrecht auf einem Grundgestell angebrachten Rahmenteilen, zwischen denen die zu belichtende Platte und zumindest eine Kopiervorlage angeordnet und während des Belichtungsvorgangs aneinandergepresst sind, mit zu beiden Seiten von Halterungen im Abstand angebrachten Belichtungslampenanordnungen und mit einer Vakuumpumpe, die mit den Halterungen verbunden ist.

Eine derartige Belichtungsvorrichtung ist aus der FR-A-2 184 314 bekannt, bei der zwei Glasplatten in einem Vakuum-Druckrahmen aus zwei zusammenpassenden Rahmenteilen angeordnet sind. Die beiden Rahmenteile sind mit Dichtstreifen ausgerüstet, die im gegeneinandergedrückten Zustand eine Vakuumdichtung bilden. Die Rahmenteile sind mit Vakuumvorrichtungen zum Evakuieren des von den Rahmenteilen eingeschlossenen Raumes ausgerüstet. Diese Vorrichtungen dienen ausserdem zum Öffnen des Druckrahmens gegen den Atmosphärendruck. Die beiden Glasplatten sind in den Rahmenteilen mit gegeneinander gerichteten Druckschablonenmustern angeordnet. Ein beidseitig mit Fotoleiter beschichtetes Metallblech wird zwischen die beiden Glasplatten eingeschoben und von zu beiden Seiten des Rahmens angeordneten Lichtquellen hoher Intensität belichtet. Das beschichtete und belichtete Blech wird entwickelt, indem die löslichen Beschichtungsteile entfernt werden. Erst dann kann das Blech selektiv geätzt und zu Erzeugnissen verarbeitet werden, die normalerweise durch Fotobedrucken angefertigt werden.

Aus der Druckschrift US-A-4 032 233 ist eine Belichtungsvorrichtung ähnlich der eingangs beschriebenen Belichtungsvorrichtung bekannt, bei der die Rahmenteile horizontal anstatt senkrecht angeordnet sind. Die Belichtungs- und Registriervorrichtung umfasst einen oberen und unteren Rahmen, zwischen denen die lichtempfindlich beschichtete Platte und Kopienvorlagen, beispielsweise Transparente, angeordnet werden. Eine äussere Dichtung zwischen den Rahmenteilen ermöglicht es, ein Vakuum an den eingeschlossenen Raum zwischen den Rahmenteilen anzulegen. In den sich gegenüberliegenden Flächen jedes Rahmenteils befindet sich ein innerer Kanal, der entlang dem Umfang der Rahmenteile angeordnet ist. Dieser Kanal ermöglicht es, ein von dem übrigen Vakuum getrenntes Vakuum anzulegen, um die Transparente in ihren Positionen festzuhalten, wenn die Rahmenteile geöffnet sind, um eine Platte zu entfernen, einzuschieben oder zu ersetzen.

Aus der Druckschrift US-A-3 385 193 ist eine drehbare Belichtungsvorrichtung für eine auf beiden Seiten gleichzeitig zu belichtende Metallplatte bekannt. Die Metallplatte wird in einen Rahmen eingelegt, der eine plane Glasplatte aufweist und der evakuiert werden kann.

Aus dem Deutschen Gebrauchsmuster 1 940 812 sind Vakuumkopiervorrichtungen, wie beispielsweise Vakuumkopierrahmen zur Belichtung lichtempfindlicher Platten, Folien od. dgl., die bei der Herstellung von Reliefformen für Druckzwecke verwendet werden, bekannt. Eine derartige Vakuumkopiervorrichtung besitzt eine Anlageplatte mit zwei voneinander getrennten Öffnungssystemen in der Oberseite, wobei an das eine Öffnungssystem eine Vakuumquelle und an das andere Öffnungssystem ein Lufteinlassregelventil angeschlossen ist. Während der Belichtung ist die lichtempfindliche Platte und die aufgelegte Kopiervorlage mit einer Vakuumabdeckfolie mit den Öffnungssystemen in Anlage gehalten und somit gegenüber der Umgebung hermetisch abgeschlossen. Die fotopolymerisierbare Platte und die daraufgelegte transparente Kopiervorlage, beispielsweise ein fotografisches Negativ, Positiv oder eine Matrize, sind auf dem flachen Vakuumkopierrahmen aufgespannt, der einen Halterahmen und die darin gehaltene Anlageplatte umfasst. Die Anlageplatte kann entweder in horizontaler oder vertikaler Richtung gehalten sein. Es wird eine Lichtquelle für die Belichtung verwendet, die Licht mit hohem Ultraviolett-Anteil ausstrahlt, wie beispielsweise eine Bogenlampe. Die Vakuumkopiervorrichtung ist so ausgelegt, dass die Luft nur in eines der beiden Öffnungssysteme durch das Lufteinlassregelventil ein- und durch das andere System zur Vakuumquelle abströmen kann. Dabei bildet sich eine lichte Luftströmung zwischen der Oberfläche der nichtbelichteten Platte und der damit in Berührung gehaltenen matten Oberfläche der Kopiervorlage aus, wodurch der zur Verminderung der Empfindlichkeit der oberen Schicht der lichtempfindlichen Platte erforderliche Sauerstoff an diese herangebracht wird.

Eine beidseitige und gleichzeitige Belichtung der lichtempfindlichen Platte ist weder ausführbar noch vorgesehen, da die Platte nur auf einer Seite eine lichtempfindliche Schicht trägt und darüber hinaus nur eine einzige Lichtquelle für die Belichtung zur Verfügung steht.

Aus der DE-B-1 154 351 ist eine Kopiervorrichtung bekannt, die aus einem evakuierbaren Gehäuse aus flexiblem Material besteht, das eine Kopiervorlage und ein lichtempfindliches Element übereinander aufnimmt. Das Gehäuse ist an einem Ende offen und wird durch eine durchsichtige Platte dicht abgedeckt, die auf einer am oberen Gehäuserand umlaufenden Dichtung aufliegt. Auf dem lichtempfindlichen Element liegt ein Raster sowie ein lichtdurchlässiger Luftsack auf, dessen elastisches Material luftundurchlässig ist. Wird Luft aus der Kopiervorrichtung abgesaugt, so dehnt die in dem Luftsack eingeschlossene Luft diesen gegen die Unterseite der Platte und den Raster hin aus, wodurch Druck auf den Raster und das lichtempfindliche Element ausgeübt wird. Die Luft, die zwischen der Kopiervorlage und dem lichtempfindlichen Element eingeschlossen ist, wird nach aussen gedrückt, so dass das lichtempfindliche Element ohne Faltenbildung auf der Kopiervorlage aufliegt. Sobald die Evakuierung abgeschlossen ist, erfolgt die Belichtung durch eine handelsübliche Lichtquelle. Auch mit dieser Kopiervorrichtung ist nur eine einseitige Belichtung des lichtempfindlichen Elements möglich.

Zur Herstellung von Fotoresistbildern wird bei der Vorrichtung nach der US-A-3547730 eine Trägerplatte beidseitig mit Fotoresistmaterial beschichtet und in einer Belichtungsvorrichtung eingebracht, die je zwei sich gegenüberliegende rechteckige Rahmen, transparente Andruckplatten mit darauf festgehaltenen transparenten Kopiervorlagen und Lichtquellen, wie z.B. Lichtbögen, aufweist. Der eine Rahmen ist mit Stiften ausgerüstet, die in Löcher im anderen Rahmen eingreifen, um die Kopiervorlagen und die Trägerplatte exakt auszurichten. Die Rahmen werden an den vier Ecken durch vier Federn, die Zugstangen umgeben, auf Abstand zueinander gehalten. Die Zugstangen werden gegen den Federdruck durch Solenoide betätigt, um die Rahmen zum dichten Anliegen für den Belichtungsvorgang zu bringen. Das Anliegen der Kopiervorlagen an dem lichtempfindlichen Fotoresistmaterial während des Belichtens erfolgt durch mechanischen Druck, ausgeübt von den Andruckplatten, die durch die Solenoide aufeinander gepresst werden. Es ist keine Evakuierung der Belichtungsanordnung vorgesehen, so dass Lufteinschlüsse, welche die Bildqualität mindern, zwischen der einzelnen Kopiervorlage und der Fotoresistschicht nicht auszuschliessen sind.

Den bekannten Belichtungsvorrichtungen ist gemeinsam, dass die zu belichtende Platte jeweils manuell bei geöffnetem Rahmen, d.h. voneinander getrennten Rahmenteilen, entnommen, eingelegt bzw. ausgewechselt werden muss.

Aufgabe der Erfindung ist es, eine Belichtungsvorrichtung der eingangs beschriebenen Art so zu verbessern, dass das Einbringen der zu belichtenden Platte in die und der Abtransport der belichteten Platte aus der Belichtungsvorrichtung automatisch erfolgt und ein Auswechseln der Kopiervorlagen in der Belichtungsvorrichtung leicht zu bewerkstelligen ist.

Diese Aufgabe wird erfindungsgemäss für die eingangs beschriebene Belichtungsvorrichtung derart gelöst, dass der eine Rahmenteil als eine ortsfeste Halterung und der andere Rahmenteil als eine dazu bewegliche Halterung ausgebildet ist, dass an dem unteren Quersteg der ortsfesten Halterung an der der Belichtungslampenanordnung zugewandten Seite ein Motor und gemeinsam auf je einer Welle Kettenräder und Zahnräder angeordnet sind, und dass der Motor mittels einer endlos über die Kettenräder geführten Antriebskette die Zahnräder antreibt, die mit weiteren Zahnrädern kämmen, welche auf durch die Halterung hindurchgeführten Wellen aufsitzen, die auf der anderen Seite der Halterung Antriebsrollen für den Transport einer Platte in den offenen Ladespalt zwischen den beiden Halterungen tragen.

Nach Beendigung der Belichtung der Platte transportieren die Antriebsrollen die beidseitig belichtete Platte aus der Belichtungsvorrichtung heraus, die danach für die Belichtung einer weiteren Platte bereitsteht.

Die weitere vorteilhafte Ausgestaltung der Erfindung ergibt sich aus den Patentansprüchen 2 bis 9.

Mit der Erfindung werden die Vorteile erzielt, dass die Handhabung der Kopiervorlage vereinfacht ist, diese schnell ausgewechselt werden können, Fehlstellen auf den belichteten Plattenoberflächen nahezu vermieden werden und dass die Kopiervorlagen und die beidseitig zu belichtende Platte positionsgenau ausgerichtet werden können.

Die Erfindung wird im folgenden anhand eines zeichnerisch dargestellten Ausführungsbeispiels näher erläutert.

Es zeigen:

Fig. 1 eine schematische Gesamtansicht im Schnitt der Belichtungsvorrichtung nach der Erfindung;

Fig. 2 in schematischer Schnittansicht voneinander getrennte Halterungen der Belichtungsvorrichtung nach Fig. 1;

Fig. 3 im Schnitt die bis auf einen Spalt zusammengefahrenen Halterungen nach Fig. 2;

Fig. 4 eine perspektivische Ansicht der Rückseite der in Richtung ortsfester Halterung vorgefahrenen Halterung, und

Fig. 5 eine perspektivische Ansicht der Rückseite der ortsfesten Halterung.

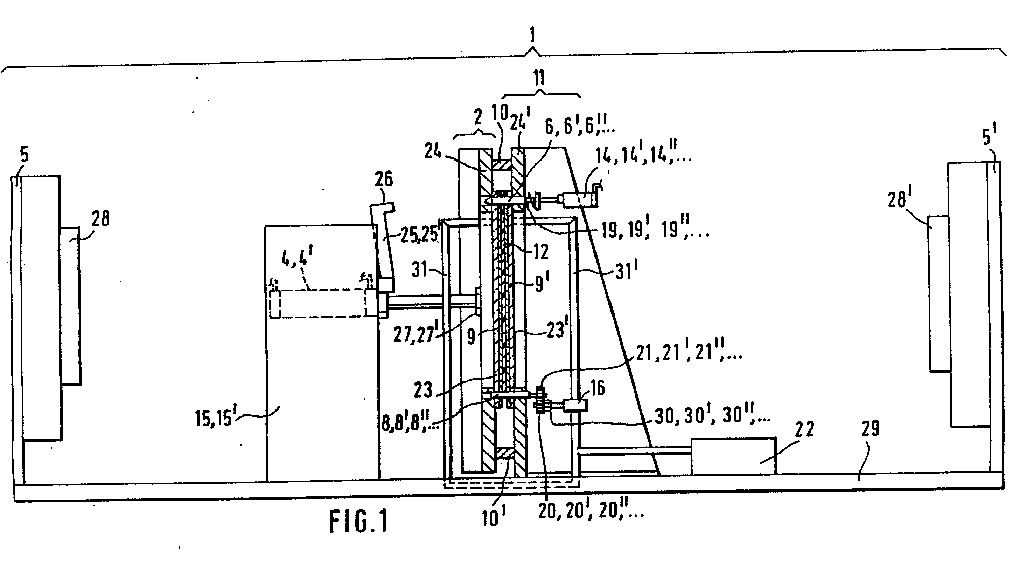

Eine Belichtungsvorrichtung 1 umfasst ein Grundgestell 29, eine linke und eine rechte Belichtungslampenanordnung 5 bzw. 5', eine bewegliche Halterung 2 und eine ortsfeste Halterung 11, wie dies in Fig. 1 schematisch im Schnitt dargestellt ist. Die Belichtungslampenanordnungen 5, 5' befinden sich an den Enden der Grundplatte des Grundgestells 29 und sind ortsfest angeordnet. Jede der Belichtungslampenanordnungen 5, 5' ist mit einer Verschlussblende 28 bzw. 28' ausgerüstet und enthält eine Lampe, die ein auf die lichtempfindliche Beschichtung einer zu belichtenden Platte 12 abgestimmtes Spektrum besitzt.

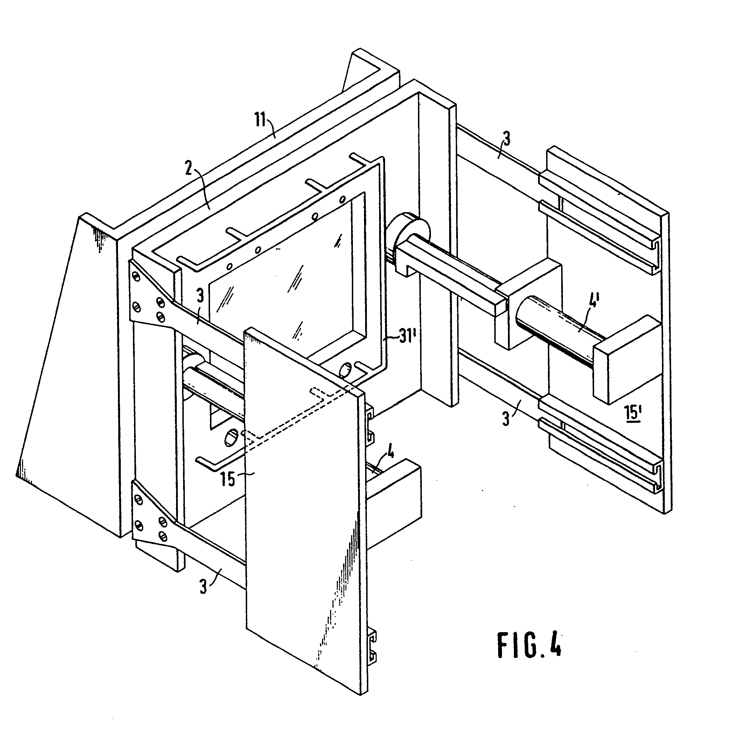

Die bewegliche Halterung 2 wird von Seitenwänden 15, 15' begrenzt, an deren Innenseiten, wie aus der perspektivischen Ansicht nach Fig. 4 ersichtlich ist, je zwei Schienen 3 mit Kugelführungen befestigt sind.

Bei den Schienen 3 handelt es sich beispielsweise um handelsübliche Teleskopschienen, in denen die Halterung 2 hin und her verschiebbar ist. Zum Verfahren der Halterung 2 sind zwei Druckluftzylinder 4, 4' vorgesehen, die mit den ortsfesten Seitenwänden 15, 15' einerseits und mit dem Rahmen 24 der Halterung 2 andererseits verbunden sind. Durch die Betätigung der Druckluftzylinder 4, 4' wird die bewegliche Halterung 2 in Richtung der ortsfesten Halterung 11 verschoben bzw. von dieser wieder zurückgezogen.

Jede der Halterungen 2, 11 weist eine plane Glasplatte 23 bzw. 23' in einem Rahmen 24 bzw. 24' auf und ist an eine Vakuumpumpe 22 angeschlossen. In jedem der Rahmen sind über den Umfang Sauger 7, 7', 7'',... angeordnet, die über gemeinsame Vakuumleitungen 31 bzw. 31' (Fig. 1 und 4) mit der Vakuumpumpe 22 in Verbindung stehen.

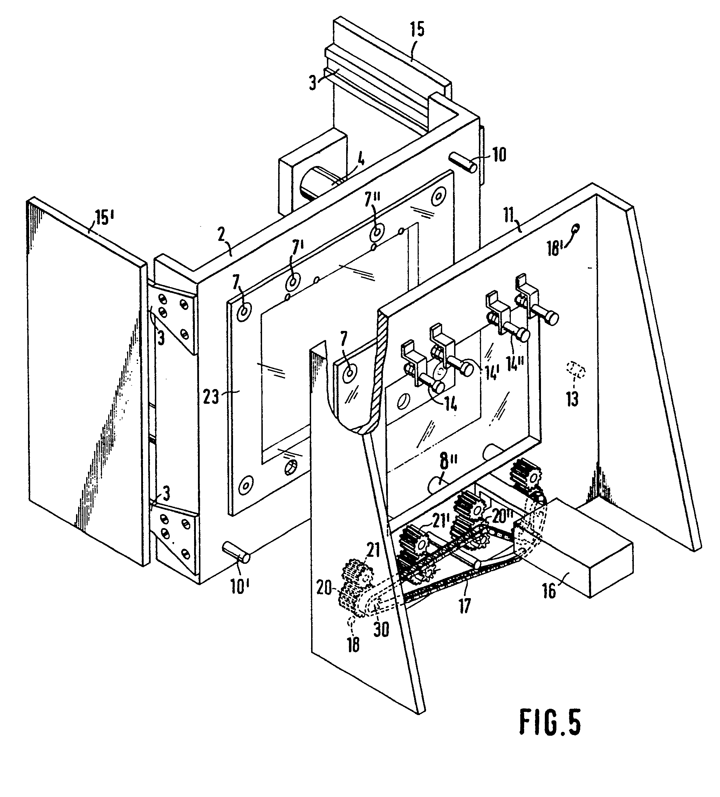

In Fig. 5 sind aus Gründen der besseren Übersichtlichkeit die Vakuumleitungen nicht dargestellt.

Die Schienen 3 an der Innenseite jeder der Seitenwände 15 bzw. 15′ sind ober- und unterhalb des jeweiligen Druckluftzylinders 4 bzw. 4′ angeordnet.

In Fig. 1 ist die zusammengefügte Stellung der beiden Halterungen 2 und 11 dargestellt, in der eine beidseitig zu belichtende Platte, beispielsweise eine Druckplatte oder eine Leiterplatte 12, sich mit Kopiervorlagen 9, 9′ in Kontakt befindet.

Zum Ausrichten und Positionieren der Kopiervorlagen 9, 9′ sind an der ortsfesten Halterung 11 Positionierstifte 6, 6′, 6″... vorhanden, die durch den Rahmen 24′ der ortsfesten Halterung 11 hindurchgeführt und mit Druckluftzylindern 14, 14′, 14″... verbunden sind. Die Positionierstifte 6, 6′, 6″... sind nahe der Unterkante des oberen Querstegs des Rahmens 24′ der Halterung 11 angeordnet, und die Druckluftzylinder 14, 14′, 14″ befinden sich auf gleicher Höhe wie die Positionierstifte auf der Rückseite der ortsfesten Halterung 11, d.h. auf der der Belichtungslampenanordnung 5′ zugewandten Seite. An den Positionierstiften 6, 6′, 6″... greifen Federn 19, 19′, 19″... an, beispielsweise Druckfedern, die im drucklosen Zustand der Druckluftzylinder 14, 14′, 14″... die Positionierstifte zurückdrücken, so dass diese mit ihren Spitzen nicht über die Glasplatte 23′ der ortsfesten Halterung 11 hinausragen. Anstelle von Druckfedern können Zugfedern verwendet werden, welche die Positionierstifte zurückziehen. Die bewegliche Halterung 2 ist mit Richtstiften 10, 10′ ausgerüstet, die in entsprechende Passlöcher 18, 18′ in der ortsfesten Halterung 11 vor dem Zusammenpressen der beiden Halterungen 2 und 11 eingreifen und die Halterungen zueinander ausrichten, bevor sie mittels der Druckluftzylinder 4, 4′ unter entsprechendem Druck zusammengeführt werden.

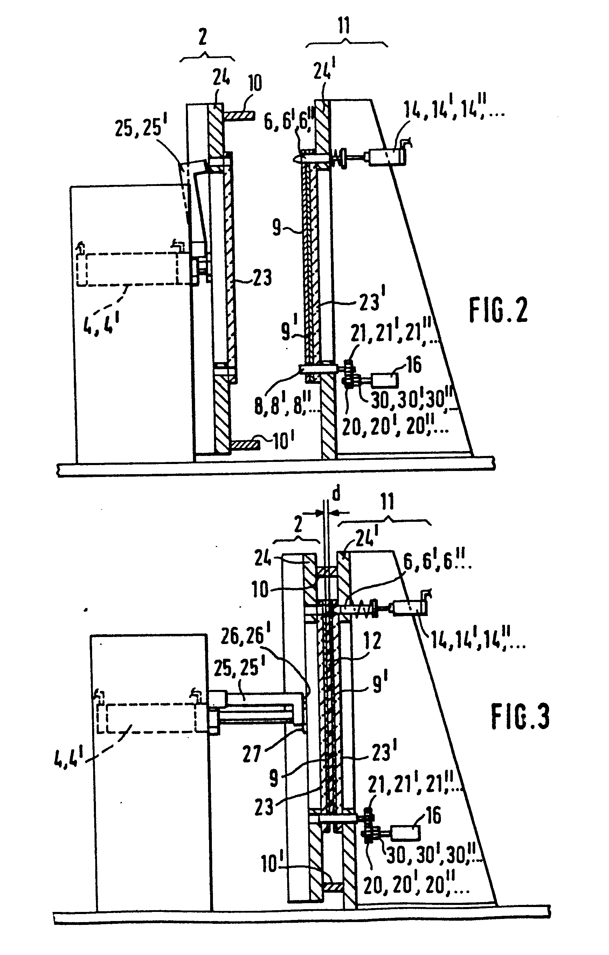

Wie aus Fig. 5 zu ersehen ist, sind an dem unteren Quersteg der ortsfesten Halterung 11 an der der Belichtungslampenanordnung 5′ zugewandten Seite ein Motor 16 und gemeinsam auf je einer Welle Kettenräder 30, 30′, 30″... und Zahnräder 20, 20′, 20″... angeordnet. Der Motor 16 treibt eine endlos über die Kettenräder 30, 30′, 30″... geführte Antriebskette 17 an. Die Zahnräder 20, 20′, 20″... sind mit weiteren Zahnrädern 21, 21′, 21″... in Eingriff, welche auf Wellen aufsitzen, die durch den Rahmen 24′ der Halterung 11 hindurchgeführt sind. Diese Wellen tragen auf der Vorderseite der Halterung 11 Antriebsrollen 8, 8′, 8″... für den Transport der zu belichtenden Platte 12 in den zwischen den beiden Halterungen gebildeten Ladespalt d in der in Fig. 3 gezeigten Ladestellung der Belichtungsvorrichtung 1.

Im Rahmen 24′ der ortsfesten Halterung 11 ist auf der der Platte 12 zugewandten Seite ein versenkbarer Sensor 13 angeordnet, der bei Betätigung durch die Platte 12 eine nicht gezeigte Kupplung zwischen dem Motor 16 und den Kettenrädern 30, 30′, 30″... bzw. der Antriebskette 17 auftrennt, um den Antrieb der Antriebsrollen 8, 8′, 8″... zu stoppen und damit die Platte 12 zwischen den Halterungen 2 und 11 stillzusetzen bzw. zu positionieren.

An der verfahrbaren Halterung 2 sind zwei schwenkbare Positionierelemente 25, 25′ in Gestalt einer Klinke angelenkt, bei denen Stirnflächen 26, 26′ in der Ladestellung der Belichtungsvorrichtung 1 (Fig. 3), in welcher die Platte 12 in den Ladespalt d eingeschoben wird, Anschläge bilden, gegen die Anschlagsflächen 27, 27′ auf dem Rahmen 24 der beweglichen Halterung 2 anliegen. In der Ladestellung nehmen die Positionierelemente 25, 25′ eine horizontale Lage ein, während sie in der Einlegestellung für die Kopiervorlagen hochgeschwenkt sind. Die Positionierung der beiden Halterungen für die Plattenzufuhr kann auch mit Hilfe von Druckzylindern, deren Kolbenstangen die Anschläge bilden, erfolgen.

Im folgenden wird der Betriebsablauf der Belichtungsvorrichtung 1 erläutert.

In Fig. 2 ist schematisch die Einlegestellung der beiden Halterungen 2 und 11 für die Kopiervorlagen 9, 9′ gezeigt. In dieser Stellung ist die verschiebbare Halterung 2 mit Hilfe der beiden Druckluftzylinder 4, 4′ in die äusserste linke Position verfahren. Die beiden Kopiervorlagen 9, 9′, die durch Papierzwischenlagen voneinander getrennt sind, werden gleichzeitig auf die Positionierstifte 6, 6′, 6″... der ortsfesten Halterung 11 aufgeschoben, wobei die Kopiervorlagen 9, 9′ entsprechende Registerlochungen für die Positionierstifte aufweisen. In dieser Stellung sind die Positionierelemente 25, 25′ hochgeschwenkt. Unmittelbar vor dem Aufeinanderpressen der beiden Halterungen 2 und 11 richten Richtstifte 10, 10′, die an der beweglichen Halterung 2 angebracht sind und in entsprechende Löcher 18, 18′ der ortsfesten Halterung 11 eingreifen, die Halterungen zueinander aus.

Anschliessend wird die Halterung 2 in Richtung der ortsfesten Halterung 11 durch Beaufschlagen der Druckluftzylinder 4, 4′ verschoben und die beiden Halterungen aneinandergepresst. Dadurch strömt die zwischen den Rahmen 24, 24′ eingeschlossene Luft ab, so dass die Kopiervorlagen plan auf den Glasplatten 23, 23′ aufliegen. Die Kopiervorlagen 9, 9′ werden danach mittels Saugern 7, 7′, 7″... an die Glasplatten 23 bzw. 23′ der Halterungen angesaugt. Die Positionierelemente 25, 25′ werden in die horizontale Lage abgeschwenkt. Die Halterung 2 wird dann durch die Druckluftzylinder 4, 4′ so weit von der ortsfesten Halterung 11 zurückgezogen, dass der sogenannte Ladespalt d von etwa 6 bis 8 mm Breite gebildet wird. In dieser Ladestellung der beiden Halterungen 2 und 11, die in Fig. 3 schematisch dargestellt ist, werden die Papierzwischenlagen entfernt.

Die zu belichtende Platte 12 wird anschliessend durch die Antriebsrollen 8, 8′, 8″... seitlich in den Ladespalt d hineintransportiert. Der Sensor 13, beispielsweise eine Lichtschranke, die in Reflexion arbeitet, oder ein Anschlagschalter, trennt, wie schon zuvor erwähnt wurde, die Motorkupplung auf, so dass die Antriebsrollen 8, 8′, 8″ angehalten und der Transport der Platte 12 beendet wird. Die zu belichtende Platte 12, die im oberen Teil mit Registerlochungen versehen ist, wird von den durch die Druckluftzylinder 14, 14', 14"... vorgeschobenen Positionierstiften 6, 6', 6"... aufgenommen und ausgerichtet.

Die Belichtungsvorrichtung 1 nimmt nunmehr ihre Belichtungsstellung, wie in Fig. 1 dargestellt, ein, wobei sich die Kopiervorlagen 9, 9' in Kontakt mit den beiden Seiten der zu belichtenden Platte 12 befinden. Es erfolgt die Belichtung durch kurzzeitiges Öffnen der Verschlussblenden 28, 28' der Belichtungslampenanordnungen 5 und 5'. Danach fährt die Halterung 2 in die Ladestellung zurück, und die Positionierstifte 6, 6', 6"... sowie der Sensor 13 werden in den Rahmen 24' der Halterung 11 versenkt. Die Antriebsrollen 8, 8', 8"... transportieren die nunmehr beidseitig belichtete Platte 12 aus der Belichtungsvorrichtung 1 heraus, die danach für die Belichtung einer weiteren Platte 12 bereitsteht. Falls die nächste Platte 12 mit denselben Kopiervorlagen wie die fertige Platte belichtet werden soll, bleiben die Kopiervorlagen während des erneuten Ladevorganges durch das Vakuum an den Saugern 7, 7', 7"... in ihren Positionen ausgerichtet.

**Patentansprüche**

1. Belichtungsvorrichtung für lichtempfindlich beschichtete Platten, mit voneinander trennbaren und zusammenführbaren, senkrecht auf einem Grundgestell angebrachten Rahmenteilen, zwischen denen die zu belichtende Platte und zumindest eine Kopiervorlage angeordnet und während des Belichtungsvorgangs aneinandergepresst sind, mit zu beiden Seiten von Halterungen im Abstand angebrachten Belichtungslampenanordnungen und mit einer Vakuumpumpe, die mit den Halterungen verbunden ist, dadurch gekennzeichnet, dass der eine Rahmenteil als eine ortsfeste Halterung (11) und der andere Rahmenteil als eine dazu bewegliche Halterung (2) ausgebildet ist, dass an dem unteren Quersteg der ortsfesten Halterung (11) an der der zugehörigen Belichtungslampenanordnung (5') zugewandten Seite ein Motor (16) und gemeinsam auf je einer Welle Kettenräder (30, 30', 30"...) und Zahnräder (20, 20', 20"...) angeordnet sind, und dass der Motor (16) mittels einer endlos über die Kettenräder (30, 30', 30"...) geführten Antriebskette (17) die Zahnräder (20, 20', 20"...) antreibt, die mit weiteren Zahnrädern (21, 21', 21"...) kämmen, welche auf durch die Halterung (11) hindurchgeführten Wellen aufsitzen, die auf der anderen Seite der Halterung Antriebsrollen (8, 8', 8"...) für den Transport einer Platte (12) in den offenen Ladespalt zwischen den beiden Halterungen tragen.

2. Belichtungsvorrichtung nach Anspruch 1, dadurch gekennzeichnet, dass jede der Halterungen (2, 11) eine plane Glasplatte (23, 23') in einem Rahmen (24, 24') aufweist und dass in jedem Rahmen über den Umfang verteilte, an die Vakuumpumpe (22) angeschlossene Sauger (7, 7', 7") angeordnet sind.

3. Belichtungsvorrichtung nach Anspruch 1, dadurch gekennzeichnet, dass die bewegliche Halterung (2) in Schienen (3) mit Kugelführung verschiebbar ist und dass zwei Druckluftzylinder (4, 4') mit dem Rahmen (24) der beweglichen Halterung (2) und mit ortsfesten Seitenwänden (15, 15') in Verbindung stehen, zwischen denen die Halterung (2) hin und her verfahrbar ist.

4. Belichtungsvorrichtung nach Anspruch 3, dadurch gekennzeichnet, dass je eine Schiene (3) oberhalb und unterhalb des Druckluftzylinders (4, 4') in der Innenseite der Seitenwand (15, 15') befestigt ist.

5. Belichtungsvorrichtung nach Anspruch 1, dadurch gekennzeichnet, dass die ortsfeste Halterung (11) Positionierstifte (6, 6', 6"...) für das Positionieren der Kopiervorlagen (9, 9') und die Aufnahme der Platte (12) aufweist und dass Druckluftzylinder (14, 14', 14"...) die Positionierstifte (6, 6', 6"...) vorschieben.

6. Belichtungsvorrichtung nach Anspruch 5, dadurch gekennzeichnet, dass die Positionierstifte (6, 6', 6"...) nahe der Unterkante des oberen Querstegs die Halterung (11) durchsetzen, dass die Druckluftzylinder (14, 14', 14"...) auf gleicher Höhe wie die Positionierstifte (6, 6', 6"...) auf der der Belichtungslampenanordnung (5') zugewandten Seite angeordnet sind und dass an den Positionierstiften (6, 6', 6"...) Zugfedern (19, 19'...) angreifen, die im drucklosen Zustand der Druckluftzylinder (14, 14', 14"...) die Positionierstifte zurückziehen.

7. Belichtungsvorrichtung nach Anspruch 1, dadurch gekennzeichnet, dass an der beweglichen Halterung (2) Richtstifte (10, 10') vorhanden sind, die in entsprechende Passlöcher (18, 18') in der ortsfesten Halterung (11) vor dem Zusammenpressen der Halterungen (2, 11) eingreifen und diese passgerecht zueinander ausrichten.

8. Belichtungsvorrichtung nach Anspruch 1, dadurch gekennzeichnet, dass ein versenkbarer Sensor (13) im Rahmen (24') der ortsfesten Halterung (11) auf der der Platte (12) zugewandten Seite angeordnet ist, dessen Betätigung durch die Platte (12) eine Kupplung zwischen dem Motor (16) und der Antriebskette (17) auftrennt, um den Antrieb der Antriebsrollen (8, 8', 8") zu stoppen.

9. Belichtungsvorrichtung nach Anspruch 1, dadurch gekennzeichnet, dass an der verfahrbaren Halterung (2) Elemente (25, 25') angelenkt sind, deren Stirnflächen (26, 26') in der Ladestellung der Belichtungsvorrichtung (1), in der die Platte (12) in den Ladespalt eingeschoben wird und die Elemente die Horizontallage einnehmen, Anschläge bilden, gegen die Anschlagsflächen (27, 27') auf dem Rahmen (24) anliegen.

**Claims**

1. Exposure device for plates carrying photosensitive coatings, comprising frame elements which can be separated from each other and moved in contact with each other and are vertically mounted on a base and between which the plate which is to be exposed and at least one master are arranged and pressed together during the exposure process, and further comprising exposure lamp arrangements disposed on either side of and at a distance from mounting supports, and comprising a vacuum pump connected with the mounting supports, characterised in that one of the frame elements is designed as a stationary mounting support (11) and the other frame element is designed as a mounting support (2) which is movable in relation to the stationary mounting support, in that a motor (16) and sprockets (30, 30', 30"...) and gear wheels (20, 20', 20"...), which are, in each case, mounted on a common shaft, are arranged at the lower crossbar of the stationary mounting support (11) on the side facing the pertinent exposure lamp arrangement, and, in that the motor (16) drives the gear wheels (20, 20', 20"...) via and endless driving chain (17) which is guided over the sprockets (30, 30', 30"...), the gear wheels (20, 20', 20"...) mating with further gear wheels (21, 21', 21"...) mounted on shafts which pass through the mounting support (11), which shafts, on the other side of the mounting support, carry drive rollers (8, 8', 8"...) serving to transport a plate (12) into the open charging gap formed between the two mounting supports.

2. An exposure device as claimed in claim 1, characterised in that each of the mounting supports (2 and 11) comprises a planar glass plate (23 and 23') in a frame (24 and 24') and in that each frame has suckers (7, 7', 7") which are spaced around its circumference and are connected with the vacuum pump (22).

3. An exposure device as claimed in claim 1, characterised in that the movable mounting support (2) is displaced in ball-guided rails (3) and in that two compressed air cylinders (4 and 4') are connected with the frame (24) of the movable mounting support (2) and with stationary side walls (15 and 15') between which the mounting support (2) can be moved forward and backward.

4. An exposure device as claimed in claim 3, characterised in that a rail (3) is fastened above and below each compressed air cylinder (4 and 4') on the inside of the side walls (15 and 15').

5. An exposure device as claimed in claim 1, characterised in that the stationary mounting support (11) is provided with positioning pins (6, 6', 6"...) for positioning the masters (9 and 9') and accomodating the plate (12), and in that the positioning pins (6, 6', 6"...) are extended by means of compressed air cylinders (14, 14', 14"...).

6. An exposure device as claimed in claim 5, characterised in that the positioning pins (6, 6', 6"...) are passed through the mounting support (11) close to the lower edge of the upper crossbar, in that the compressed air cylinders (14, 14', 14"...) are arranged on a level with the positioning pins (6, 6', 6"...) on the side facing the exposure lamp arrangement (5') and in that the positioning pins (6, 6', 6"...) are engaged by tension springs (19, 19', 19"...) which retract the positioning pins when the compressed air cylinders are in the pressureless state.

7. An exposure device as claimed in claim 1, characterised in that adjusting pins (10 and 10') are provided on the movable mounting support (2), which engage in corresponding adjusting holes (18, 18') in the stationary mounting support (11) before the mounting supports (2 and 11) are pressed together and thus adjust the mounting supports to an exact position with respect to each other.

8. An exposure device as claimed in claim 1, characterised in that a retractable sensor (13) is arranged in the frame (24') of the stationary support (11) on the side facing the plate (12), which disconnects a coupling between the motor (16) and the driving chain (17), when it is actuated by the plate (12) and thus stops the rotation of the drive rollers (8, 8', 8"...).

9. An exposure device as claimed in claim 1, characterised in that elements (25 and 25') are pivotally mounted on the movable mounting support (2), the end faces (26 and 26') of which act as stops which are contacted by stop faces (27 and 27') on the frame (24), when the exposure device (1) is in the charging position, in which the plate (12) is inserted into the charging gap and the elements are in a horizontal position.

**Revendications**

1. Dispositif d'exposition de plaques recouvertes d'une couche photosensible comportant des éléments de cadre pouvant être séparés les uns des autres et réunis, montés verticalement sur un socle, entre lesquels la plaque à exposer et au moins un original sont disposés et pressés ensemble pendant l'exposition, des dispositifs de lampes d'exposition montés espacés des deux côtés de supports, ainsi qu'une pompe à vide qui est reliée aux supports, caractérisé en ce qu'un élément de cadre est un support (11) fixe et l'autre élément de cadre est un support (2) mobile par rapport au premier, en ce que sur la traverse inférieure du support fixe (11), sur le côté tourné vers le dispositif associé de lampes d'exposition (5') sont disposés un moteur (16) et sur un même arbre des pignons à chaîne (30, 30', 30"...) et des roues dentées (20, 20', 20"...) et en ce que le moteur (16) entraîne au moyen d'une chaîne de transmission (17) guidée sur les pignons à chaîne (30, 30', 30"...) les roues dentées (20, 20', 20"...) qui engrènent avec d'autres roues dentées (21, 21', 21"...) montées sur des arbres traversant le support (11), et qui portent, de l'autre côté du support, des galets d'entraînement (8, 8', 8"...) pour le transport d'une plaque (12) dans la fente de chargement ouverte ménagée entre les deux supports.

2. Dispositif d'exposition selon la revendication 1, caractérisé en ce que chacun des supports (2, 11) comporte une plaque de verre plane (23, 23') dans un cadre (24, 24') et en ce que des aspirateurs (7, 7', et 7") raccordés à la pompe à vide (22) sont répartis sur le pourtour de chaque cadre.

3. Dispositif d'exposition selon la revendication 1, caractérisé en ce que le support mobile (2) peut coulisser dans des rails (3) à guidage à billes et en ce que deux vérins à air comprimé (4, 4') sont reliés au cadre (24) du support mobile (2) et aux parois latérales (15, 15') fixes entre lesquelles le support (2) peut se déplacer dans un mouvement de va-et-vient.

4. Dispositif d'exposition selon la revendication 3, caractérisé en ce qu'un rail (3) est fixé au-dessus et au-dessous de chaque vérin à air comprimé (4, 4') sur la face interne du parois latéral (15, 15').

5. Dispositif d'exposition selon la revendication 1, caractérisé en ce que le support fixe (11) présente des doigts de positionnement (6, 6', 6"...) pour le positionnement des originaux (9, 9') et la mise en place de la plaque (12) et en ce que les vérins à air comprimé (14, 14', 14"...) poussent en avant les doigts de positionnement (6, 6', 6"...).

6. Dispositif d'exposition selon la revendication 5, caractérisé en ce que les doigts de positionnement (6, 6', 6"...) traversent le support (11) à proximité du bord inférieur de la traverse supérieure, en ce que les vérins à air comprimé (14, 14', 14") sont disposés à la même hauteur que les doigts de positionnement (6, 6', 6") sur la face tournée vers le dispositif d'exposition de lampes (5') et en ce que les doigts de positionnement (6, 6', 6"...) sont saisis par des ressorts de traction (19, 19'...) qui tirent vers l'arrière les doigts de positionnement lorsque les vérins à air comprimé (14, 14', 14") ne sont pas sous pression.

7. Dispositif d'exposition selon la revendication 1, caractérisé en ce que le support mobile (2) comporte des taquets d'ajustement (10, 10') qui s'engagent dans des trous correspondants (18, 18') pratiqués dans le support fixe (11) avant que le supports (2, 11) soient pressés ensemble et ajustent ceux-ci dans leur position l'un par rapport à l'autre.

8. Dispositif d'exposition selon la revendication 1, caractérisé en ce qu'un capteur (13) escamotable est disposé dans le cadre (24') du support fixe (11) sur le côté tourné vers la plaque (12) dont l'actionnement par la plaque (12) supprime un accouplement entre le moteur (16) et la chaîne de transmission (17) afin de stopper la rotation des galets d'entraînement (8, 8', 8"...).

9. Dispositif d'exposition selon la revendication 1, caractérisé en ce que des éléments (25, 25') s'articulent sur le support mobile (2) dont les faces frontales (26, 26') constituent des butées contre lesquelles reposent les faces de butée (27, 27') sur le cadre (24), lorsque le dispositif d'exposition (1) est en position de chargement dans laquelle la plaque (12) est introduite dans la fente de chargement et les éléments sont en position horizontale.

5'

28'

29

22

30, 30', 30'', ...

21, 21', 21'', ...

16

20, 20', 20'', ...

10'

23

8, 8', 8'', ...

9

27, 27'

23'

9'

12

31'

19, 19', 19'', ...

14, 14', 14'', ...

6, 6', 6'', ...

2, 10

24

24

2

25, 25'

31

26

4, 4'

15, 15'

11

1

28

5

FIG.1

FIG.2

FIG.3

FIG.4

FIG.5